# EUROPÄISCHE PATENTANMELDUNG

(11) **EP 4 671 388 A1**
(43) Veröffentlichungstag der Anmeldung: **31.12.2025**
(21) Anmeldenummer: 24184848.0
(22) Anmeldetag: 27.06.2024
(51) Int. Cl.: C21B 3/08, C04B 5/06, C21C 5/54, C22B 7/04

(54) **VERFAHREN ZUM KONDITIONIEREN VON ELEKTROOFENSCHLACKEN**

(71) Anmelder: ThyssenKrupp Steel Europe AG, 47166 Duisburg (DE)
(72) Erfinder: Hoff, Nadine, 47166 Duisburg (DE); Reka, Fitore, 47166 Duisburg (DE); Schubert, Daniel, 47166 Duisburg (DE); Semleit, Tim, 47166 Duisburg (DE); Kohnen, Boris, 47166 Duisburg (DE)
(74) Vertreter: ThyssenKrupp Steel Europe AG

(57) **Zusammenfassung**

Die Erfindung betrifft ein Verfahren zum Konditionieren von Elektroofenschlacken (1), welche im schmelzflüssigen Zustand mit einem kohlenstoffhaltigen Reduktionsmittel behandelt werden, wobei ein Wasserstoff enthaltendes Formiergas in die schmelzflüssige Elektroofenschlacke (1) eingeleitet wird.

## Beschreibung

Die Erfindung betrifft ein Verfahren zum Konditionieren von Elektroofenschlacken.

Eisenoxidreiche Schlacken entstehen üblicherweise bei technischen Schmelz- und Raffinationsprozessen, wie z. B. dem Sauerstoffblasprozess oder beim Erschmelzen von Schrotten und/oder (direkt)reduzierten Eisenträgern in Schmelzöfen. Die dort entstehenden Schlacken haben Eisenoxidgehalte von mehr als 10 Gew.-%. Insbesondere Elektroofenschlacken, auch EOS genannt, sind reich an Eisenoxid und somit nur begrenzt einsatz- und/oder recyclingfähig.

Eisenoxidreiche Schlacken haben mithin nur ein begrenztes Anwendungsfeld in der Bauindustrie oder im Deponiebau, so dass eine hochwertige Verwertung in großen Mengen kaum möglich ist. Eine nachträgliche Reduktion dieser eisenoxidreichen Schlacken mit Kohlenstoff funktioniert suboptimal, da für diesen Prozess zusätzlich Zeit und Energie aufgebracht werden muss. Außerdem kann es passieren, dass bei der Verwendung von festem Kohlenstoff, Reste davon in den Schlacken verbleiben. Bekannt ist, Kohlenstoff in die Schlacken einzubringen, vgl. auch Kapitel 2.8.1 in Gara et al. "BEHANDLUNG VON RESTSTOFFEN UND ABFÄLLEN IN DER EISEN- UND STAHLINDUSTRIE", MONOGRAPHIEN Band 92 M-092, Wien, 1998, abrufbar unter dem Link: https://www.umweltbundesamt.at/fileadmin/site/publikationen/M092.pdf, mit dem Ziel, diese in der Hauptsache zum Schäumen zu bringen, um eine Rückreaktion des in der Schlacke gebildeten Eisenoxids zu bewirken und den Energieverbrauch und die Schallemissionen zu reduzieren. Wie aus Tabelle 2.8-2 der vorgenannten Publikation ersichtlich, sind die oxidischen Eisengehalte in der Elektroofenschlacke mit 10 Gew.-% und mehr dennoch sehr hoch und mithin nicht für ein weites Anwendungsspektrum verwendbar.

Die Aufgabe besteht darin, ein Verfahren zum Konditionieren von Elektroofenschlacken bereitzustellen, mit welchem die Qualität und/oder Weiterverarbeitung von Elektroofenschlacken verbessert werden kann.

Gelöst wird die Aufgabe mit einem Verfahren nach Anspruch 1. Weitere vorteilhafte Ausgestaltungen sind in den Unteransprüchen ausgeführt.

Die Lehre der Erfindung bezieht sich auf ein Verfahren zum Konditionieren von Elektroofenschlacken, welche im schmelzflüssigen Zustand mit einem kohlenstoffhaltigen Reduktionsmittel behandelt werden, wobei ein Wasserstoff enthaltendes Formiergas in die schmelzflüssige Elektroofenschlacke eingeleitet wird.

Das Herstellen von Eisenschmelzen und Schlacken im Elektroofen ist Stand der Technik. Hierzu werden im Wesentlichen Eisenträger, welche mindestens eines der Bestandteile Eisenschwamm, Schrott, Roheisen und/oder eisenhaltige Hüttenrest- und/oder Hüttenkreislaufstoffe umfassen, Schlackenbildner, umfassend oder bestehend aus mindestens einem Bestandteil aus der Gruppe SiO₂, CaO, MgO, Al₂O₃, und optional kohlenstoffhaltige Reduktionsmittel, wie zum Beispiel Kohle, Koks und/oder nichtfossile Kohlenstoffe, eingebracht und zu einer Eisenschmelze und einer darüberliegenden schmelzflüssigen Elektroofenschlacke erschmolzen. Der Elektroofen verfügt über mehrere Elektroden, welche mit elektrischem Strom beaufschlagbar bzw. beaufschlagt sind und damit die erforderliche Energie zum Erschmelzen bereitstellen. Je nach Größe/Dimension des Elektroofens können drei, vier, fünf, sechs oder mehr als sechs Elektroden verwendet werden. Die zum Erschmelzen benötigte Energie wird bevorzugt zumindest zum Teil aus regenerativer Energie (Sonne, Wind, Wasser, Biomasse) bereitgestellt. Wenn die benötigte Energie, und falls diese im benötigten Umfang verfügbar sein sollte, vollständig durch regenerative Energie bereitgestellt werden kann, kann der Elektroofen klimaneutral(er) betrieben werden. Die konventionell hergestellten Elektroofenschlacken weisen einen Gesamtgehalt (in Gew.-%) an oxidischem Eisen von mindestens 10 %, insbesondere mindestens 11 %, 12 %, 13 %, 14 %, 15 %, 16 %, 17 %, 18 %, 19 % und maximal 50 %, insbesondere maximal 45 %, vorzugsweise maximal 40 % auf. Das oxidische Eisen ist mit FeₓO_{y} stellvertretend für FeO, Fe₂O₃, Fe₃O₄ oder einer Mischung daraus. In den meisten Fällen besteht das oxidische Eisen in der Elektroofenschlacke im Wesentlichen aus FeO.

Die Erfindung knüpft mithin bei Vorliegen einer schmelzflüssigen Elektroofenschlacke an und deren Konditionierung mit einer anschließenden verbesserten Qualität und/oder Weiterverarbeitung.

Der Elektroofen kann ein Ofen der Gattung OSBF (Open Slag Bath Furnace) sein. Hierzu zählen Elektroreduktionsöfen, vor allem SAF (Submerged Electric Arc Furnace), welche Schmelzöfen mit Lichtbogen-Widerstandserwärmung sind, die Lichtbögen zwischen der Elektrode und dem Einsatzstoff und/oder der Flüssigphase bilden oder welche den Einsatzstoff und/oder die Flüssigphase mittels Joule-Effekt erwärmen. Beim SAF sind die Elektroden in den Einsatzstoff und/oder die Flüssigphase, insbesondere in die Flüssigschlacke eingetaucht. Je nach Funktionsprinzip/Betriebsweise können die Elektroreduktionsöfen als Wechselstrom-Lichtbogen-Reduktionsöfen (SAFac) oder Gleichstrom-Lichtbogen-Reduktionsöfen (SAFdc) ausgeführt sein. Alternativ können auch Schmelzöfen mit direkter Lichtbogeneinwirkung, welche vom oben beschriebenen Funktionsprinzip/Betriebsweise abweichen, sogenannte EAF (Electric Arc Furnace), zum Einsatz kommen, welche Lichtbögen zwischen der Elektrode und der Flüssigphase bilden. Dies umfasst den Wechselstrom-Lichtbogen-Schmelzofen (EAFac), den Gleichstrom-Lichtbogen-Schmelzofen (EAFdc) und den Pfannenofen LF (Ladle Furnace).

Elektroreduktionsöfen mit Lichtbogen-Widerstandserwärmung (SAF) werden beispielsweise mit einer reduzierenden Atmosphäre betrieben, wohingegen Elektroöfen mit direkter Lichtbogeneinwirkung (EAF) mit einer oxidierenden Atmosphäre betrieben werden.

Gemäß einer Ausgestaltung enthält oder besteht das Formiergas aus 0,1 bis 20 Vol.-% Wasserstoff, Rest Stickstoff und/oder Argon. Der Wasserstoff im Formiergas dient als Reaktionsbeschleuniger zum Reduzieren des oxidischen Eisens, insbesondere im Zusammenhang mit einem kohlenstoffhaltigen Reduktionsmittel. Der Wasserstoff kann insbesondere mit mindestens 0,3 Vol.-%, vorzugsweise mit mindestens 0,55 Vol.-%, bevorzugt mit mindestens 0,8 Vol.-%, besonders bevorzugt mit mindestens 1,15 Vol.-% im Formiergas enthalten sein. Der Wasserstoff kann insbesondere mit maximal 17 Vol.-%, vorzugsweise mit maximal 13 Vol.-%, bevorzugt mit maximal 10 Vol.-%, besonders bevorzugt mit maximal 7 Vol.-% im Formiergas enthalten sein, um beispielsweise den Wasserstoffgehalt unterhalb der Explosionsgrenze zu halten. Bei dem Rest handelt es sich bevorzugt um ein Schutzgas, wobei aufgrund der gegenüber anderen Schutzgasen geringeren Kosten bevorzugt Stickstoff verwendet wird. Alternativ oder zusätzlich ist aber auch die Nutzung von einem oder mehreren Edelgasen, wie beispielsweise Argon, möglich.

Gemäß einer Ausgestaltung kann das Konditionieren der schmelzflüssigen Elektroofenschlacken im Elektroofen stattfinden. Diese Verfahrensweise hat den Vorteil, dass kein zusätzliches Aggregat benötigt wird, um die finalen Eigenschaften in der schmelzflüssigen Elektroofenschlacke einzustellen.

Die schmelzflüssige Elektroofenschlacke wird in einem Elektroofen erzeugt, welche in eine Pfanne überführt wird und das Konditionieren der schmelzflüssigen Elektroofenschlacken gemäß einer alternativen Ausgestaltung in der Pfanne stattfinden kann. In dieser Verfahrensweise ist eine bessere und/oder gezieltere Einflussnahme auf die Einstellung der finalen Eigenschaften möglich, da im Vergleich zum Konditionieren im Elektroofen keine (negative) Beeinflussung der Eisenschmelze möglich ist, insbesondere die Konditionierungszeit (Behandlungszeit) individuell nach Bedarf eingestellt werden kann.

Gemäß einer Ausgestaltung kann das Formiergas zusammen mit dem kohlenstoffhaltigen Reduktionsmittel in die schmelzflüssige Elektroofenschlacke eingeleitet werden. Zusammen mit dem im Formiergas enthaltenen Wasserstoff kann die Reaktion zum Reduzieren des oxidischen Eisens beschleunigt werden, was sich positiv auf die Konditionierungszeit (Behandlungszeit) auswirken kann. Bevorzugt kann das Formiergas als Trägergas für das kohlenstoffhaltige Reduktionsmittel fungieren, insbesondere wenn das kohlenstoffhaltige Reduktionsmittel als Feststoff, vorzugsweise als Partikel vorliegt, um das Befördern des kohlenstoffhaltigen Reduktionsmittels in die schmelzflüssige Elektroofenschlacke zusätzlich zu unterstützen.

Gemäß einer alternativen Ausgestaltung kann das Formiergas separat zum kohlenstoffhaltigen Reduktionsmittel eingeleitet werden. Dies hat den Vorteil, bedarfsgerecht in Abhängigkeit von den final einzustellenden Eigenschaften dosieren zu können.

Kohlenstoffhaltige Reduktionsmittel können bevorzugt im festen Zustand eingeleitet werden und beispielsweise Altplastiken, Biomasse, Kunststoffe oder Mischungen enthalten oder daraus bestehen.

Kohlenstoffhaltige Reduktionsmittel können auch in gasförmigem Zustand eingeleitet werden und beispielsweise Kohlenstoffmonoxid enthalten oder daraus bestehen.

Nach dem Konditionieren umfasst der Gesamtgehalt an oxidischem Eisen in der Elektroofenschlacke maximal 10,0 Gew.-%. Der Gesamtgehalt (in Gew.-%) an oxidischem Eisen kann insbesondere maximal 9,5 %, 9,0 %, 8,5 %, vorzugsweise maximal 8,0 %, 7,5 %, 7,0 %, bevorzugt maximal 6,5 %, 6,0 %, 5,5 %, besonders bevorzugt maximal 5,0 %, 4,5 %, 4,0 %, weiter bevorzugt maximal 3,5 %, 3,0 %, 2,5 %, weiter bevorzugt maximal 2,0 %, 1,5 %, 1,0 % betragen. Theoretisch wäre ein Gesamtgehalt von 0 möglich, hat jedoch keine Praxisrelevanz, da in der Regel immer ein Gesamtgehalt an oxidischem Eisen > 0 %, insbesondere > 0,25 % vorliegen wird.

Um nicht nur die Elektroofenschlacken im Eisengehalt zu senken, sondern bei Bedarf auch in eine gewünschte Zielzusammensetzung zu überführen, wird der Schlackenbildner umfassend oder bestehend aus mindestens einem Bestandteil aus der Gruppe SiO₂, CaO, MgO, Al₂O₃ in einer Menge zugegeben, dass eine Basizität B4 zwischen 0,7 und 4,5 eingestellt werden kann. B4 kann insbesondere mindestens 0,8, vorzugsweise mindestens 0,9 und insbesondere maximal 3,7, vorzugsweise maximal 2,6, bevorzugt 1,8 betragen. Die Basizität B4 entspricht dem Verhältnis (CaO+MgO) zu (SiO₂+Al₂O₃), wobei die Ermittlung der charakteristischen Größen generell in Schlacken im festen Zustand dem Fachmann geläufig sind.

Die Ermittlung der Zusammensetzung der Elektroofenschlacken kann beispielsweise nach DIN EN ISO 12677:2013-02 "Chemische Analyse von feuerfesten Produkten mittels Röntgenfluoreszenz (RFA) - Fused Cast-Bead Methode" durchgeführt werden.

Gemäß einer Ausgestaltung kann die Elektroofenschlacke oder Teile daraus nach dem Konditionieren granuliert werden, durch rasches Abkühlen, wie beispielsweise nach dem Stand der Technik durch eine Nass- oder Trockengranulation, bei gegebener chemischer Zusammensetzung, in eine amorphe Struktur überführt werden, d.h. durch die Granulation erhält sie einen Glasgehalt von mindestens 40 %, insbesondere mindestens 70 %, vorzugsweise mindestens 90 % und maximal 100 %, insbesondere bis zu 99 %. Mithin handelt es sich dann um granulierte Elektroofenschlacken. Der Glasgehalt kann mittels Röntgenbeugungsanalyse erfasst werden, s. DIN EN 13925-1:2003-07, "Zerstörungsfreie Prüfung - Röntgendiffraktometrie von polykristallinen und amorphen Materialien" - Teil 1: Allgemeine Grundlagen. Diese ist reaktiver als eine kristalline Struktur, die sich bei langsamer Abkühlung einstellt. Dieses Produkt kann in granularer Form dann im besten Fall als Zementklinkersubstitut verwendet werden, d.h. es hat latent hydraulische Eigenschaften, d.h. es reagiert bei Zugabe von Wasser. Dies würde ein Produkt mit kristalliner Struktur nicht machen, da die Struktur zu stabil ist, die amorphe hingegen nicht. Durch die bevorzugte Kombination aus Konditionieren und Granulieren kann ein hüttensandähnliches Produkt geschaffen werden.

Eine Zusammensetzung der Elektroofenschlacke nach dem Konditionieren und optionalen Granulieren kann beispielhaft aus den Bestandteilen in Gew.-%: CaO: 30 bis 60 %, SiO₂: 25 bis 50 %, Al₂O₃: 4 bis 18 %, MgO: 3 bis 15 %, FeₓO_{y}: > 0, insbesondere > 0,10 bis 5 % und Verunreinigungen in Summe zu 100 Gew.-% bestehen.

Aufgrund der Abhängigkeit von konkret vorliegenden Umständen, beispielsweise spezifische Anlagenparameter betreffend, ist der das Verfahren ausführende Fachmann darauf angewiesen, einen Gehalt eines einzuleitenden Formiergases und die Konditionierungszeit im Elektroofen oder in die Pfanne empirisch derart einzustellen, dass die konditionierten Elektroofenschlacken den gewünschten Zustand aufweisen. Diese empirische Findung eines ausreichend hohen Einleitens eines Wasserstoff enthaltenden Formiergases und/oder einer ausreichend langen Konditionierungszeit stellt den Fachmann vor keine besonderen Schwierigkeiten, da weniger technische als vielmehr wirtschaftliche Erwägungen vorzunehmen sind.

Nachfolgend wird die Erfindung anhand von Ausführungsbeispielen näher erläutert.

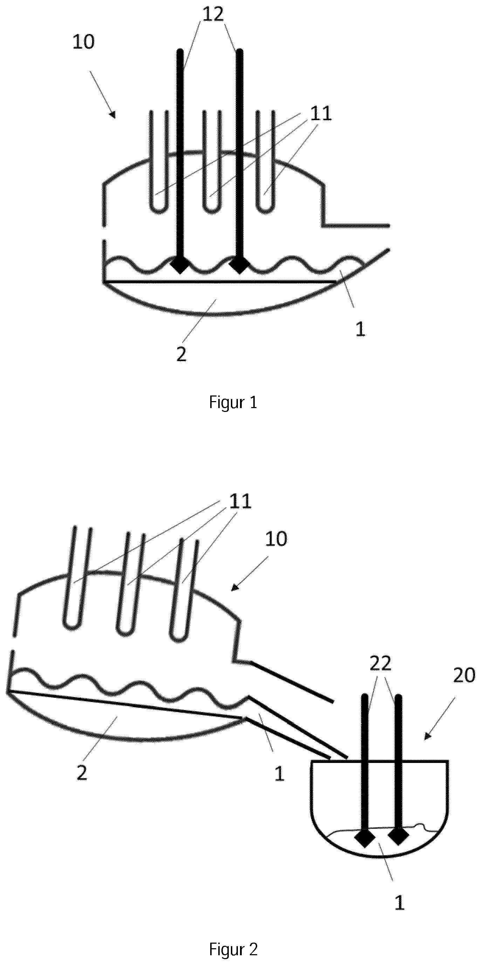

**Figur 1** zeigt anhand einer beispielhaften Ausführung einen Elektroofen 10, in welchen Eisenträger, Schlackenbildner und optional kohlenstoffhaltige Reduktionsmittel eingebracht werden, um diese Stoffe zu einer Eisenschmelze (2) und einer darüberliegenden schmelzflüssigen Elektroofenschlacke (1) zu erschmelzen. Der Elektroofen (10) verfügt über mehrere Elektroden (11), welche mit elektrischem Strom beaufschlagbar sind und damit die erforderliche Energie zum Erschmelzen bereitstellen. Das Funktionsprinzip eines Elektroofens (10) zum Erschmelzen ist dem Fachmann bekannt. Der Elektroofen (10) kann bevorzugt ein EAF sein.

Ein Verfahren zum Konditionieren von Elektroofenschlacken (1) sieht vor, diese im schmelzflüssigen Zustand mit einem kohlenstoffhaltigen Reduktionsmittel zu behandeln, wobei ein Wasserstoff enthaltendes Formiergas in die schmelzflüssige Elektroofenschlacke eingeleitet wird. Das Formiergas kann beispielsweise mittels Lanzen (12) direkt in die schmelzflüssige Elektroofenschlacke (1) eingeleitet werden. Das Formiergas enthält oder besteht aus 0,1 bis 20 Vol.-% Wasserstoff, Rest Stickstoff und/oder Argon. Das Konditionieren der schmelzflüssigen Elektroofenschlacken (1) findet in dieser beispielhaften Ausführung im Elektroofen (10) statt. Das Formiergas wird bevorzugt zusammen mit dem kohlenstoffhaltigen Reduktionsmittel in die schmelzflüssige Elektroofenschlacke (1) eingeleitet, wobei das Formiergas als Trägergas für das kohlenstoffhaltige Reduktionsmittel fungiert.

**Figur 2** zeigt anhand einer alternativen beispielhaften Ausführung einen Elektroofen 10, in welchem konform zu Figur 1 standardmäßig eine Eisenschmelze (2) und eine darüberliegende schmelzflüssige Elektroofenschlacke (1) erschmolzen wird. Anders als in Figur 1 wird die in einem Elektroofen (10) schmelzflüssige Elektroofenschlacke (1) in eine Pfanne (20) überführt und das Konditionieren der schmelzflüssigen Elektroofenschlacken (1) findet in der Pfanne (20) statt. Das Formiergas kann beispielsweise mittels Lanzen (22) direkt in die schmelzflüssige Elektroofenschlacke (1) in der Pfanne (20) eingeleitet werden. Das Formiergas enthält oder besteht aus 0,1 bis 20 Vol.-% Wasserstoff, Rest Stickstoff und/oder Argon. Das Formiergas wird bevorzugt zusammen mit dem kohlenstoffhaltigen Reduktionsmittel in die schmelzflüssige Elektroofenschlacke (1) eingeleitet, wobei das Formiergas als Trägergas für das kohlenstoffhaltige Reduktionsmittel fungiert.

Die zu konditionierende Elektroofenschlacke weist einen Gesamtgehalt an oxidischem Eisen von mindestens 10 Gew.-% auf, wobei das oxidische Eisen in Form von FeO, Fe₂O₃, Fe₃O₄ oder einer Mischung daraus vorliegen kann. Die Elektroofenschlacke (1) kann nach dem Konditionieren einen Gesamtgehalt an oxidischem Eisen von maximal 10,0 Gew.-% umfassen. Die Elektroofenschlacke (1) kann nach dem Konditionieren eine Basizität B4 bevorzugt zwischen 0,7 und 1,8 aufweisen.

Im Labormaßstab wurde eine Elektroofenschlacke (1) nach dem Prinzip in Figur 2 in einem Elektroofen (10) des Typs EAF erschmolzen, welche in eine Pfanne (20) zum Konditionieren überführt wurde. Die Zusammensetzung der zu konditionierenden Elektroofenschlacke (1) betrug (alle Werte in Gew.-%): 40,1 % CaO, 14,1 % SiO₂, 5,67 % Al₂O₃, 11,7 % MgO, 22,7 % FeₓO_{y}. Die Basizität B4 betrug 2,62.

25 % SiO₂ und 10 % Al₂O₃ als Schlackenbildner bezogen auf die Gesamtmenge der Elektroofenschlacke (1) wurden zugegeben. Des Weiteren wurde ein Formiergas mit 5 Vol.-% Wasserstoff und als Rest Stickstoff als Trägergas mit Kohlenstoffpartikel (Kohlepartikel) zugeführt. Die Konditionierungszeit betrug ca. 20 min. Die Elektroofenschlacke (1) wies nach dem Konditionieren folgende Zusammensetzung (alle Werte in Gew.-%) auf: 36,7 % CaO, 35,8 % SiO₂, 14,4 % Al₂O₃, 10,7 % MgO, < 2 % FeₓO_{y}, < 1 % Fe_{metallisch}. Die Basizität B4 betrug 0,95. Mit einem Gesamtgehalt an oxidischem Eisen von weniger als 2 Gew.-% und einer Basizität B4 von 0,95 war die konditionierte Elektroofenschlacke einem Hüttensand sehr ähnlich. Anschließend wurde die konditionierte Elektroofenschlacke (1) mit einem Glasgehalt von > 90 % im bekannten Trockenverfahren granuliert.

Durch die Erfindung können Elektroofenschlacken in ihrer Qualität verbessert und/oder erhöht werden, um somit auch bisher nicht zugängliche Anwendungsgebiete dieser Schlackengattung bedienen zu können. Vorzugsweise können die Elektroofenschlacken als Edukt in der Zementindustrie eingesetzt werden, beispielsweise wie derzeit der standardmäßig verwendete Hüttensand (Hochofenschlacke) aus den Hochöfen.

## Patentansprüche

1. Verfahren zum Konditionieren von Elektroofenschlacken (1), welche im schmelzflüssigen Zustand mit einem kohlenstoffhaltigen Reduktionsmittel behandelt werden, **dadurch gekennzeichnet, dass** ein Wasserstoff enthaltendes Formiergas in die schmelzflüssige Elektroofenschlacke (1) eingeleitet wird.

2. Verfahren nach Anspruch 1, wobei das Formiergas zwischen 0,1 bis 20 Vol.-% Wasserstoff, Rest Stickstoff und/oder Argon enthält oder daraus besteht.

3. Verfahren nach einem der vorgenannten Ansprüche, wobei das Konditionieren der schmelzflüssigen Elektroofenschlacken (1) im Elektroofen (10) stattfindet.

4. Verfahren nach Anspruch 1 oder 2, wobei die schmelzflüssige Elektroofenschlacke (1) in einem Elektroofen (10) erzeugt wird, welche in eine Pfanne (20) überführt wird und das Konditionieren der schmelzflüssigen Elektroofenschlacken (1) in der Pfanne (20) stattfindet.

5. Verfahren nach einem der vorgenannten Ansprüche, wobei das Formiergas zusammen mit dem kohlenstoffhaltigen Reduktionsmittel in die schmelzflüssige Elektroofenschlacke (1) eingeleitet wird.

6. Verfahren nach Anspruch 5, wobei das Formiergas als Trägergas für das kohlenstoffhaltige Reduktionsmittel fungiert.

7. Verfahren nach einem der Ansprüche 1 bis 4, wobei das Formiergas separat zum kohlenstoffhaltigen Reduktionsmittel eingeleitet wird.

8. Verfahren nach einem der vorgenannten Ansprüche, wobei das kohlenstoffhaltige Reduktionsmittel im festen Zustand eingeleitet wird und Altplastiken, Biomasse, Kunststoffe oder Mischungen enthält oder daraus besteht.

9. Verfahren nach einem der vorgenannten Ansprüche, wobei das kohlenstoffhaltige Reduktionsmittel in gasförmigem Zustand eingeleitet wird und Kohlenstoffmonoxid enthält oder daraus besteht.

10. Verfahren nach einem der vorgenannten Ansprüche, wobei die Elektroofenschlacke (1) nach dem Konditionieren einen Gesamtgehalt an oxidischem Eisen von maximal 10,0 Gew.-% umfasst.

11. Verfahren nach einem der vorgenannten Ansprüche, wobei die Elektroofenschlacke (1) nach dem Konditionieren eine Basizität B4 zwischen 0,7 und 4,5 aufweist, wobei Basizität B4 dem Verhältnis CaO + MgO zu SiO₂ + Al₂O₃ entspricht.

12. Verfahren nach einem der vorgenannten Ansprüche, wobei die Elektroofenschlacke (1) oder Teile daraus nach dem Konditionieren granuliert wird und einen Glasgehalt von mindestens 40 % aufweist.

13. Verfahren nach einem der vorgenannten Ansprüche, wobei die Elektroofenschlacke (1) aus den Bestandteilen in Gew.-%: CaO: 30 bis 60 %, SiO₂: 25 bis 50 %, Al₂O₃: 4 bis 18 %, MgO: 3 bis 15 %, FeₓO_{y}: > 0 bis 5 % und Verunreinigungen in Summe zu 100 Gew.-% besteht.
